# EUROPEAN PATENT APPLICATION

(11) **EP 2 091 184 A1**
(43) Date of publication of application: **19.08.2009**
(21) Application number: 08706716.1
(22) Date of filing: 22.02.2008
(51) Int. Cl.: H04L 12/54

(54) **METHOD AND SYSTEM FOR PUBLISHING THE CONTENT, METHOD AND SYSTEM FOR QUERYING THE CONTENT**

(30) Priority: 19.04.2007 CN 200710098354
(71) Applicant: Huawei Technologies Co., Ltd., Longgang District, Shenzhen Guangdong 518129 (CN)
(72) Inventor: LI, Feng, Shenzhen Guangdong 518129 (CN)
(74) Representative: Thun, Clemens
(86) International application number: PCT/CN2008/070343
(87) International publication number: WO 2008/128450

(57) **Abstract**

A method for publishing a content disclosed herein includes an ordinary node that stores the content releases the content in a first ordinary node network that covers the ordinary node. The ordinary node searches for a super node responsible for the content in a super node network, and the super node releases the content in a second ordinary node network managed by the super node. A system for publishing a content, a method and a system for searching for a content are disclosed herein. Therefore, the super node does not need to store the index information, and the occupation of the limited storage space of the super node is reduced.

## Description

### FIELD OF THE INVENTION

The present invention relates to network technologies, and in particular, to a method and a system for publishing contents, and a method and a system for searching for contents.

### BACKGROUND

More and more nodes are added into the Peer to Peer (P2P) network. In order to give full play to the capable nodes in the P2P network, a concept of a hierarchical P2P network is put forward. In a hierarchical network, ordinary nodes may make up multiple ordinary node networks according to different areas, and then a super node is set for each ordinary network. The super node may be a more capable node selected out of each ordinary node network, and a more capable node reconfigured for each ordinary node network. Afterward, the super nodes make up multiple super node networks, and a stronger super node is set for each super node network. That process goes on, and finally, a hierarchical network is generated. For example, a P2P network and an Internet Protocol Television (IPTV) network may be organized hierarchically.

Taking the hierarchical P2P network as an example, the hierarchical P2P network in the prior art includes ordinary nodes and super nodes. The ordinary nodes in the ordinary node network need only to store the index information of the contents in the ordinary node network in a distributed way, and there are a large number of ordinary nodes in the ordinary node network. Therefore, each ordinary node needs to store a moderate amount of index information. The super nodes in a super node network need to store the index information of all contents in the managed ordinary node network in a distributed way. There are a relatively small number of super nodes, so that each super node needs to store a larger amount of index information.

A method for publishing a content in the prior art is as follows:
publishing, by an ordinary node that stores a content, the content in an ordinary node network that covers this ordinary node; and
publishing the content in a super node network, where: the index information of the content is stored in the super node network when the super node network releases the content; and, for every new content released, the ordinary node needs not only to add the index of the content onto the ordinary node which ought to store the index of the content, but also to add the index of the content onto the super node which ought to store the index of the content.

The inventor of the present invention finds at least the following defects in the prior art:
The super node in the super node network needs to store the index information of all contents in the ordinary node network managed by the super node in a distributed way. Therefore, each super node needs to store a large amount of index information, which consumes the limited storage space of the super nodes. Moreover, for each content released by the ordinary node, the super node needs to create or update the index of the content. Because there are a large number of ordinary nodes, the index of the super node is updated frequently, and the processing load of the super node is heavier.

### SUMMARY

A method and a system for publishing a content, and a method and a system for searching for a content are provided in an embodiment of the present invention. Through the technical solution provided herein, the super node does not need to store index information.

A method for publishing a content is provided in an embodiment of the present invention. The method includes:
publishing, by an ordinary node that stores the content, the content in the first ordinary node network that covers the ordinary node;
searching for the super node responsible for the content in the super node network; and
publishing, by the super node, the content in the second ordinary node network managed by the super node.

A method for searching for a content is provided in an embodiment of the present invention. The method includes:
searching, by the ordinary node that needs to search for a content, for the index information of the content in the third ordinary node network that covers the ordinary node;
searching for the super node responsible for the content in the super node network;
searching, by the super node responsible for the content, for the index information responsible for the content in the ordinary node network managed by the super node; and
returning the index information responsible for the content to the ordinary node that needs to search for the content.

A system for publishing a content is provided in an embodiment of the present invention. The system includes:
a first ordinary node network, adapted to: store the index information of the content in the first ordinary node network when publishing the content, and send the first trigger information to the super node network;
a super node network, adapted to: receive the first trigger information of the first ordinary node network, search for the second super node responsible for the content in the super node network, and send the second trigger information to the second ordinary node network managed by the second super node; and
a second ordinary node network, adapted to store the index information of the content in the second ordinary node network after receiving the second trigger information of the super node network.

A system for searching for a content is provided in an embodiment of the present invention. The system includes:
a third ordinary node network, adapted to: search for the index information of the content in the third ordinary node network, and receive the index information of the content;
a super node network, adapted to: search for the second super node responsible for the content in the super node network if failing to find the index information of the content in the third ordinary node network, and send trigger information to the second ordinary node network managed by the second super node; and
a second ordinary node network, adapted to: search for the index information of the content in the second ordinary node network after receiving the trigger information of the super node network, and send the index information of the content to the third ordinary node network.

A network device is provided in an embodiment of the present invention. The network device includes:
an information receiving unit, adapted to receive trigger information that carries a content ID of a unique specific content;
a key value generating unit, adapted to generate the key value of the content according to the content ID received by the information receiving unit; and
an ordinary node searching unit, adapted to search for an ordinary node responsible for the key value generated by the key value generating unit.

In the technical solution under the present invention, the content that ought to be released in the super node network is released in the ordinary node network managed by the super node. Therefore, the index information that ought to be stored in the super node is stored in the ordinary node network managed by the super node. Moreover, the index information responsible for the content may be searched out from the ordinary node network. Therefore, the super node does not need to store the index information, and the occupation of the limited space of the super node is reduced.

### BRIEF DESCRIPTION OF THE DRAWINGS

FIG. 1 is a flowchart of a method for publishing a content according to a first embodiment of the present invention;

FIG. 2 is a flowchart of a method for publishing a content according to a second embodiment of the present invention;

FIG. 3 is a flowchart of a method for searching for a content according to a first embodiment of the present invention;

FIG. 4 is a flowchart of a method for searching for a content according to a second embodiment of the present invention;

FIG. 5 shows a structure of a network device according to a first embodiment of the present invention;

FIG. 6 shows a structure of a network device according to a second embodiment of the present invention;

FIG. 7 shows a structure of a system for publishing a content according to a first embodiment of the present invention;

FIG. 8 shows a structure of a system for publishing a content according to a second embodiment of the present invention;

FIG. 9 shows a structure of a system for searching for a content according to a first embodiment of the present invention; and

FIG. 10 shows a structure of a system for searching for a content according to a third embodiment of the present invention.

### DETAILED DESCRIPTION

In order to make the technical solution, objectives and merits of the present invention clearer, the invention is detailed below by reference to accompanying drawings and preferred embodiments.

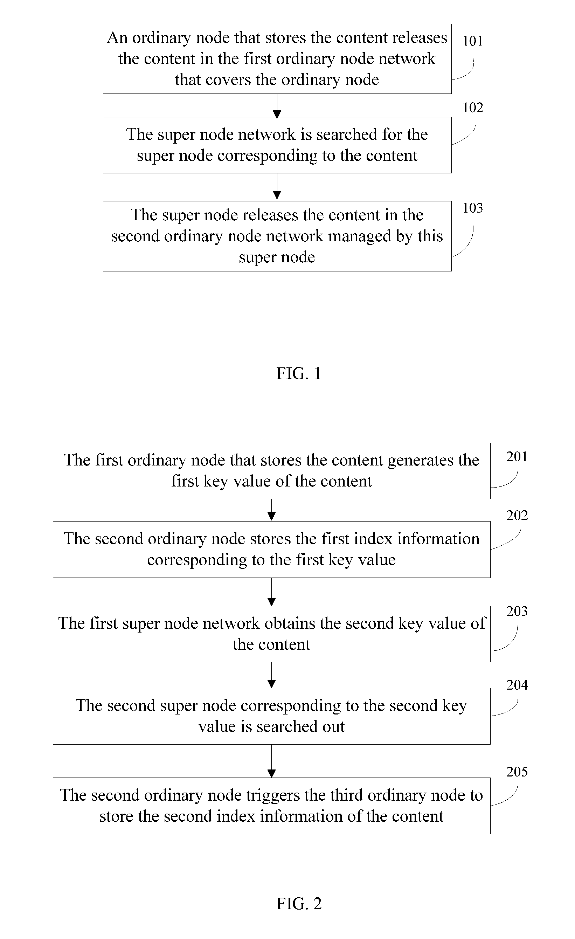

As shown in FIG. 1, a method for publishing a content in the first embodiment of the present invention includes the following steps:

101: The ordinary node that stores the content releases the content in the first ordinary node network that covers this ordinary node.

When a content stored by the ordinary node needs to be released, the content is released in the ordinary node network that covers this ordinary node first so that the ordinary node of this ordinary node network can search out the desired content.

102: The super node network is searched for the super node responsible for the content.

In a hierarchical network, the content needs to be released further. Each different content in the super node network corresponds to a specific super node. Therefore, when the content is released in the super node network, it is necessary to search out the super node responsible for the content, namely, the super node that manages the ordinary node which releases the content.

103: The super node releases the content in the second ordinary node network managed by this super node.

After the super node responsible for the content is found, the super node releases the content in the second ordinary node network managed by the super node.

In the prior art, after a content is released in the super node network, the index information of the content is stored in the super node network. By comparison, in the technical solution under the present invention, the content that ought to be released in the super node network is released in the ordinary node network managed by the super node. Therefore, the index information that ought to be stored in the super node is stored in the ordinary node network managed by the super node. Therefore, the super node does not need to store the index information, and the occupation of the limited space of the super node is reduced.

As shown in FIG. 2, a method for publishing a content in the second embodiment of the present invention includes the following steps:

201: The first ordinary node that stores the content generates the first key value of the content.

The first ordinary node generates the first key value of the content according to the preset first key value generation algorithm. The preset algorithm may be Hash algorithm or Message Digest (MD) algorithm only if the algorithm can generate a unique key value for the content and the key value finally generated for the same content is the same. The ordinary node may be an ordinary network node in the hierarchical P2P network, or an Edge Server (ES) in the IPTV network.

202: The second ordinary node stores the first index information responsible for the first key value, and the second ordinary node and the first ordinary node are covered by the first ordinary node network.

A search operation is performed to find the second ordinary node that ought to store the first index information responsible for the first key value according to the preset query algorithm, or find the second ordinary node from the preset node table according to the first key value. In the ordinary node network, the range of the key values to be stored by each ordinary node is definite, and each ordinary node stores a specific range of key values. For example, an ordinary node network covers five ordinary nodes, and the range of the key values to be stored by them may be 0-2, 2-4, 4-6, 6-8, and 8-10 respectively. Therefore, after the key value is obtained, it is easy to find the ordinary node that ought to store the index information responsible for the key value according to the preset query algorithm. In an ordinary node, an entry of index information corresponds to a key value. The first query algorithm may be based on the algorithm such as Distributed Hash Table (DHT). The node table stores the information such as node ID of each ordinary node in the ordinary node network. Therefore, after the key value is obtained, it is easy to find the ordinary node that ought to store the key value through the node table according to the key value. The node table may be stored on the super node responsible for the ordinary node network, or stored on an ordinary node selected in the ordinary node network, or stored on every ordinary node.

After the corresponding ordinary node is found, the ordinary node is triggered to store the first index information. In order for other ordinary nodes to interact with the first ordinary node after obtaining the index information, the index information needs to include the information that uniquely identifies the first ordinary node, for example, the network address of the first ordinary node, and the unique serial number of the first ordinary node in the network. Therefore, the ordinary node that obtains the index information can interact with the first ordinary node.

By now, the content has been released in the first ordinary node network.

203: The first super node network obtains the second key value of the content, and the first super node manages the first ordinary node network.

Because the network is hierarchical, it is necessary to release the content not only in the ordinary node network, but also in the super node network. In this way, all the ordinary nodes in the lower-layer ordinary node network in the whole super node network can find the index information of the content. For that purpose, the first super node needs to be triggered to obtain the second key value. The first super node may generate the second key value through the second key value generation algorithm according to the content ID of the content from the first ordinary node or the second ordinary node. The second key value generation algorithm may be the same as or different from the first key value generation algorithm. If the second key value generation algorithm is the same as the first key value generation algorithm, the second key value is the same as the first key value. In this case, therefore, the second key value may be sent by the first ordinary node or the second ordinary node to the first super node. The content ID may be a name of the content, or any information that can uniquely identify the content.

The first ordinary node or the second ordinary node determines the address of the first super node according to its own route information, or obtains the address of the first super node from other ordinary nodes, and then sends trigger information to the first super node. In practice, the first super node may be determined by obtaining the information such as the first super node network ID that uniquely identifies the first super node, and then sends trigger information to the first super node.

204: The second super node responsible for the second key value is searched out.

Likewise, in the super node network, the key value that needs to be stored by each super node is definite, and each super node stores a specific range of key values. Therefore, after the key value is obtained, it is easy to find the super node that ought to store the key value according to the preset second query algorithm. The second query algorithm may be the same as or different from the first query algorithm.

The super node network also maintains the node table, and stores the information such as node ID of each super node in the super node network. Therefore, after the key value is obtained, it is easy to find the super node that ought to store the key value through the node table. The node table may be stored on the node of an upper-layer network, or stored on a super node selected in the super node network, or stored on every super node.

205: The second super node triggers the third ordinary node to store the second index information of the content. The third ordinary node is covered by the second ordinary node network responsible for the second super node.

The super node does not store the index information. Therefore, after the key value is obtained by the second super node that ought to store the index information responsible for the key value, the corresponding second ordinary network is searched for the third ordinary node that ought to store the second index information responsible for the third key value in the second ordinary network through the preset third query algorithm according to the obtained key value. Therefore, the index information that ought to be stored on the super node is stored onto the ordinary node. Likewise, the third query algorithm may be the same as or different from the first query algorithm and the second query algorithm.

The third ordinary node network also maintains the node table, and stores the information such as node ID of each ordinary node in the third ordinary node network. Therefore, after the key value is obtained, it is easy to find the ordinary node that ought to store the key value through the node table. The node table may be stored on the super node, or stored on an ordinary node selected in the ordinary node network, or stored on every ordinary node.

After receiving the corresponding key value, the third ordinary node stores the second index information that carries the key value. The index information may be directed to the first ordinary node of the content responsible for the key value, or directed to the first super node of the first ordinary node network that covers the first ordinary node. This embodiment describes only the scenario where the content is released in the ordinary node network first and then released in the super node network. In practice, the content may be released in the super node network first and then released in the ordinary node network; or released in the super node network and the ordinary node network concurrently.

The key value received by the third ordinary node may come from the second super node, or from the fifth ordinary node in the third ordinary node network. The key value from the second super node is generated by the second super node according to the key value generation algorithm of the third ordinary node network. If the key value generation algorithm of the third ordinary node network is the same as that of the super node network, the second super node may send a key value to the third ordinary node directly. The key value from the fifth ordinary node is generated by the fifth ordinary node through the key value generation algorithm of the third ordinary node network according to the content ID from the second super node.

Through this embodiment, the index information that ought to be stored in the super node may be stored on the ordinary node in the ordinary node network managed by the super node. Therefore, the super node does not need to store the index information, and the occupation of the limited space of the super node is reduced.

Because the index information is directed differently, the processing mode of sending the same content in the same ordinary node network (namely, second sending) is different. If the index information is directed to the ordinary node that stores the content, the index information is still released through the technical solution illustrated in FIG. 1 when the fourth ordinary node covered by the first ordinary node network sends the same content again. However, in the case that the index information is directed to the super node that manages the ordinary node network which covers the ordinary node storing the content, if the fourth ordinary node that stores the content releases the content again, the content needs only to be released in the first ordinary node network, and the second ordinary node updates the corresponding index information.

The specific process is as follows: The fourth ordinary node that stores the content obtains the first key value of the content, and triggers the second ordinary node to update the first index information responsible for the first key value.

The fourth ordinary node generates the key value of the content according to the preset algorithm, searches for the second ordinary node that ought to store the key value through the preset first query algorithm according to the key value, and triggers the second ordinary node to update the first index information responsible for the key value. Therefore, the index information can be directed to the first ordinary node and the fourth ordinary node that have released the content.

In this way, when the same content is released in the fourth ordinary node (namely, when the same content is released for a second time), the content needs only to be released in the ordinary node network that covers the fourth ordinary node, and the ordinary node that ought to store the index information inclusive of the content key value updates the stored index information, without the need of publishing the content in the super node network again. Therefore, the frequency of updating the index information is reduced, and the processing load of the system is reduced.

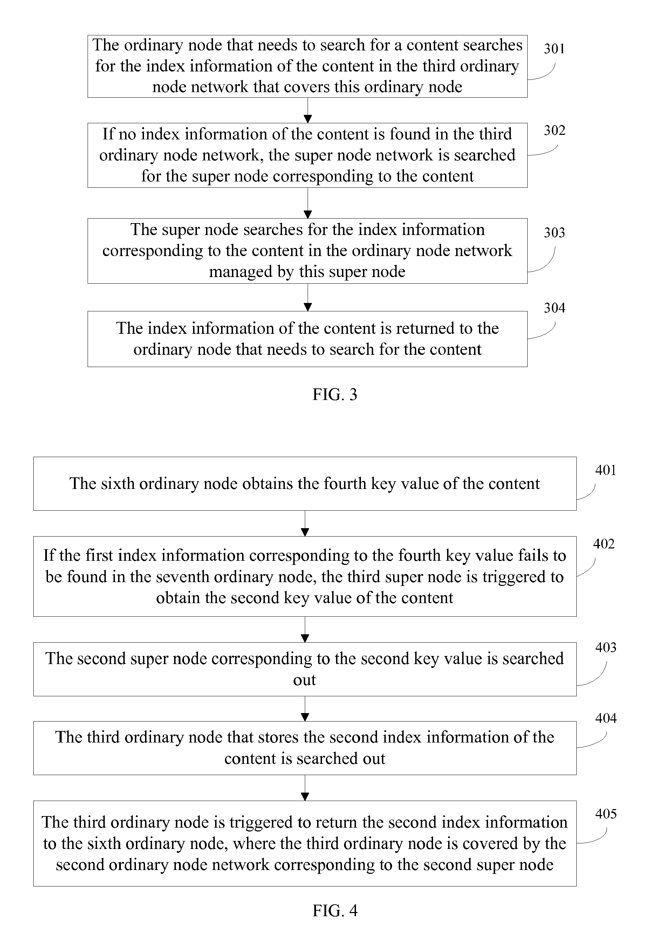

FIG. 3 illustrates a method for searching for a content in the first embodiment of the present invention. The method includes the following steps:

301: The ordinary node that needs to search for a content searches for the index information of the content in the third ordinary node network that covers this ordinary node.

When an ordinary node needs to search for a content, the index information responsible for the content is searched out of the ordinary node network that covers this ordinary node first. In this way, the content is searched out through the index information.

302. If no index information of the content is found in the third ordinary node network, the super node responsible for the content may be searched out of the super node network.

If the ordinary node finds no corresponding index information in the ordinary node network that covers this ordinary node, the ordinary node may go on searching in the super node network. In the super node network, each content corresponds to an entry of index information. Therefore, the super node responsible for the content may be searched out of the super node network.

303: The super node searches for the index information responsible for the content in the ordinary node network managed by this super node.

After the super node responsible for the content is found, the super node searches for the index information responsible for the content in the ordinary node network managed by the super node.

304: The index information responsible for the content is returned to the ordinary node that needs to search for the content.

After the index information responsible for the content is found, the index information is returned to the ordinary node that needs to search for the content. Therefore, the ordinary node that needs to search for the content can search out the content according to the index information.

In this embodiment, the index information responsible for the content may be searched out of the ordinary node network. Therefore, the index information that ought to be stored in the super node network may be stored in the ordinary node network managed by the super node, the super node does not need to store the index information, and the occupation of the limited space of the super node is reduced.

FIG. 4 illustrates a method for searching for a content in the second embodiment of the present invention. The method includes the following steps:

401: The sixth ordinary node obtains the fourth key value of the content.

To obtain a content, the sixth ordinary node needs to obtain the index information of the content first, and then interacts with the ordinary node that stores the content according to the index information, thus obtaining the content. The sixth ordinary node obtains the key value of the content through a preset algorithm according to the content name.

After obtaining the key value of the content, the sixth ordinary node may find the seventh ordinary node that ought to store the index information inclusive of the key value according to the key value by means of the query algorithm for publishing the content. The query algorithm for publishing the content is applied here in order to ensure that the same ordinary node is found through the same key value. The seventh ordinary node may also be found through a node table.

In this embodiment, in the case that no index information is found in the third ordinary node network that covers the sixth ordinary node, the corresponding index information may also be found in the ordinary node network directly in practice.

402: If the first index information responsible for the fourth key value fails to be found in the seventh ordinary node, the third super node is triggered to obtain the second key value of the content. Both the sixth ordinary node and the seventh ordinary node are covered by the third ordinary node network, and the third super node manages the third ordinary node network.

Because the network is hierarchical, the index information may be found in the super node network if the index information fails to be found in the ordinary node network. In this way, the sixth ordinary node or the seventh ordinary node determines the information about the third super node that manages the third ordinary node network which covers the sixth or seventh ordinary node according to the route information, or such information is obtained from other ordinary nodes. Afterward, trigger information is sent to the third super node. The trigger information may carry the information such as the content name so that the third super node can generate the second key value through a preset algorithm according to the content name. If the third ordinary node network and the super node network use the same key value generation algorithm, the key value may be sent to the third super node directly so that the third super node obtains the key value directly.

403: The second super node responsible for the second key value is searched out.

Likewise, the third super node searches for the second super node in the same way as searching for the second super node at the time of publishing the content.

404. The third ordinary node that stores the second index information of the content is searched out.

This key value is stored not by the second super node, but by the third ordinary node that ought to store the key value in the second ordinary node network managed by the second super node. Therefore, after obtaining the key value, the second super node can find the third ordinary node that ought to store the second index information through a preset query algorithm. The second query algorithm is the same as the query algorithm applied at the time of publishing the content.

405: The third ordinary node is triggered to return the second index information to the sixth ordinary node, where the third ordinary node is covered by the second ordinary node network managed by the second super node.

After finding the third ordinary node that ought to store the key value, the second super node triggers the third ordinary node to return the index information inclusive of the key value to the sixth ordinary node, and the sixth ordinary node obtains the index information. Therefore, the sixth ordinary node can interact with the ordinary node that stores the content according to the index information, and obtain the content. The second super node may send trigger information to the third ordinary node according to a preset message format. The trigger information carries at least the key value and the information about the first ordinary node. Therefore, the third ordinary node can find the index information of the key value according to the key value, and return the found index information inclusive of the key value to the sixth ordinary node according to the information about the sixth ordinary node.

Through the method for searching for a content in this embodiment, the index information stored in the ordinary node may be obtained, the index information that ought to be stored in the super node may be stored on the ordinary node in the ordinary node network managed by the super node, and the content may be searched out of the ordinary node. Therefore, the super node does not need to store the index information, and the occupation of the limited space of the super node is reduced.

In the method for searching for a content in the second embodiment, the third ordinary node returns the second index information to the sixth ordinary node in two scenarios. The first scenario is as follows: The index information carries the information about the ordinary node of the corresponding content. In this case, the sixth ordinary node may interact with the ordinary node directly according to the information about the ordinary node. The second scenario is as follows: The index information carries only the information about the super node that manages the ordinary node network which covers the ordinary node storing the corresponding content. Therefore, on the basis of the second embodiment, the method for searching for a content in the third embodiment includes the following steps:

The sixth ordinary node triggers the first super node to find the second ordinary node that stores the first index information. The second ordinary node is covered by the first ordinary node network managed by the first super node.

The first super node triggers the second ordinary node to return the first index information to the sixth ordinary node.

According to the obtained information about the first super node, the sixth ordinary node sends trigger information to the first super node. Therefore, the first super node can obtain the first key value according to the trigger information, and then find the second ordinary node that ought to store the key value according to the first key value.

As regards the trigger information sent by the sixth ordinary node to the first super node, the trigger information may be sent by the sixth ordinary node to the first super node directly, or sent by the sixth ordinary node to the first super node through the third super node that manages the third ordinary node network which covers the sixth ordinary node.

In practice, the first ordinary node may also be searched out in the following way:

The sixth ordinary node triggers the first super node to obtain the content ID of the content, and the first super node triggers the ordinary node covered by the first ordinary node network to obtain the first key value of the content according to the content ID. Afterward, the first super node searches for the second ordinary node that ought to store the first index information responsible for the first key value, or finds the second ordinary node in the preset first node table according to the first key value. In this way, the first super node needs only to send the content ID to the first ordinary node network managed by the first super node, and the ordinary node of the ordinary node network generates the first key value, and finds the corresponding second ordinary node. Therefore, the processing load of the super node is reduced, and the load of the super node is bearable when the index information is directed to the super node.

After finding the second ordinary node, the first super node may trigger the second ordinary node to find the first index information responsible for the first key value in the index information stored by the second ordinary node, and return the first index information to the sixth ordinary node. Therefore, the sixth ordinary node may interact with the ordinary node that stores the content according to the first index information, and obtain the content.

Through this embodiment, the ordinary node may further obtain the index information directed to the ordinary node after obtaining the index information directed only to the super node. Therefore, at the time of publishing the same content for a second time, the content needs only to be released in the ordinary node network rather than in the super node network, thus avoiding the trouble of updating the index information and avoiding additional processing load of the super node.

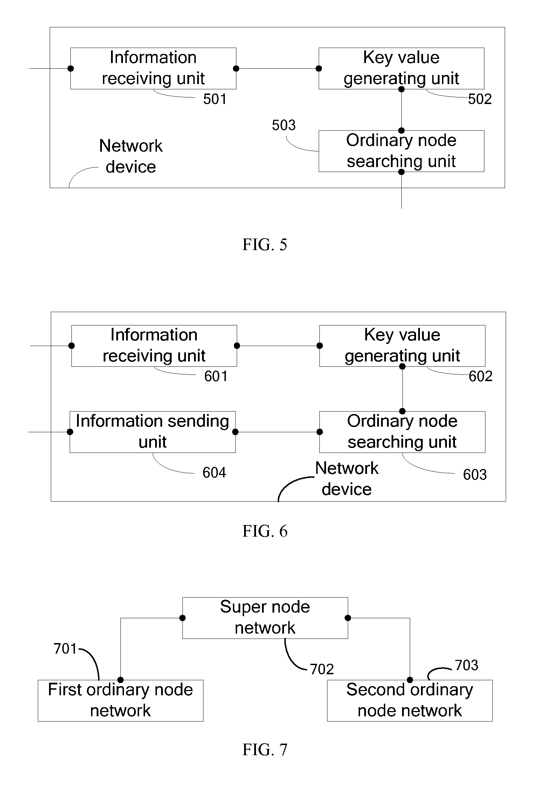

As shown in FIG. 5, a network device provided in the first embodiment of the present invention includes:
an information receiving unit 501, adapted to receive trigger information that carries a content ID of a unique specific content and may come from an ordinary node or a super node;
a key value generating unit 502, adapted to generate the key value of the content according to the content ID by means of a preset key value generation algorithm such as Hash algorithm; and
an ordinary node searching unit 503, adapted to search for the ordinary node responsible for the key value.

Each ordinary node corresponds to different contents, but a key value uniquely corresponds to a content. Therefore, the ordinary node responsible for the content may be found through the key value.

The network device in this embodiment may serve as an ordinary node of the ordinary node network, or serve as a super node of the super node network. When serving as a super node, the network device may search for the ordinary node responsible for the key value in the ordinary node network managed by the super node. In this way, the ordinary node is triggered to create, update, or return the index information, the super node does not need to store the index information, and the occupation of the limited storage space of the super node is reduced. When serving as an ordinary node, the network device may generate a key value according to the content ID, and the corresponding ordinary node can be found according to the key value. Therefore, the corresponding super node needs only to send the content ID to this ordinary node without generating any key value, thus reducing the processing load of the super node.

As shown in FIG. 6, a network device provided in the second embodiment of the present invention includes:
an information receiving unit 601, adapted to receive trigger information that carries a content ID of a unique specific content;
a key value generating unit 602, adapted to generate the key value of the content according to the content ID;
an ordinary node searching unit 603, adapted to search for the ordinary node responsible for the key value; and
an information sending unit 604, adapted to send trigger information to the network node responsible for the key value.

The location of the network device in the network is different, and the functions of the trigger information sent by the network device are different. When serving as a super node of the super node network, the network device may trigger the corresponding ordinary node to create, update or return the index information. In this way, the super node does not need to store the index information, and the occupation of the limited storage space of the super node is reduced. If the network device serves as an ordinary node located in an ordinary node network that does not cover the ordinary node which stores the content, the network device may trigger the corresponding ordinary node to create, update or return the index information. Therefore, the corresponding super node needs only to send a content ID to this ordinary node without generating any key value, thus reducing the processing load of the super node.

As shown in FIG. 7, a system for publishing a content in the first embodiment of the present invention includes a first ordinary node network 701, a super node network 702, and a second ordinary node network 703.

The first ordinary node network 701 is adapted to: store the index information of the content in this ordinary node network when publishing the content, and send the first trigger information to the super node network.

The first ordinary node network includes:
a first ordinary node, adapted to: store the content, generate the key value of the content in the first ordinary node network (i.e., the first key value), and search the first ordinary node network for the second ordinary node responsible for the first key value; and
a second ordinary node, adapted to store the index information of the content so that the first ordinary node network can store the index information of the content in this ordinary node network when publishing the content.

The ordinary node network is adapted to search for the key value in the ordinary node network, where the key value uniquely corresponds to the content, and the key value uniquely corresponds to the index information.

The super node network 702 is adapted to: receive the first trigger information, search for the second super node responsible for the content in this super node network, and send the second trigger information to the second ordinary node network managed by the second super node.

The super node network is adapted to search for the key value between the ordinary node networks, where the key value uniquely corresponds to the content, and the key value uniquely corresponds to the index information.

The second ordinary node network 703 managed by the second super node is adapted to store the index information of the content in this ordinary node network after receiving the second trigger information.

The second ordinary node network covers a third ordinary node, adapted to store the index information of the content so that the second ordinary node network can store the corresponding index information when publishing the content.

In this embodiment, the content that ought to be released in the super node network is stored into the ordinary node network managed by the super node. Therefore, the index information that ought to be stored in the super node is stored in the ordinary node network managed by the super node, the super node does not need to store the index information, and the occupation of the limited space of the super node is reduced.

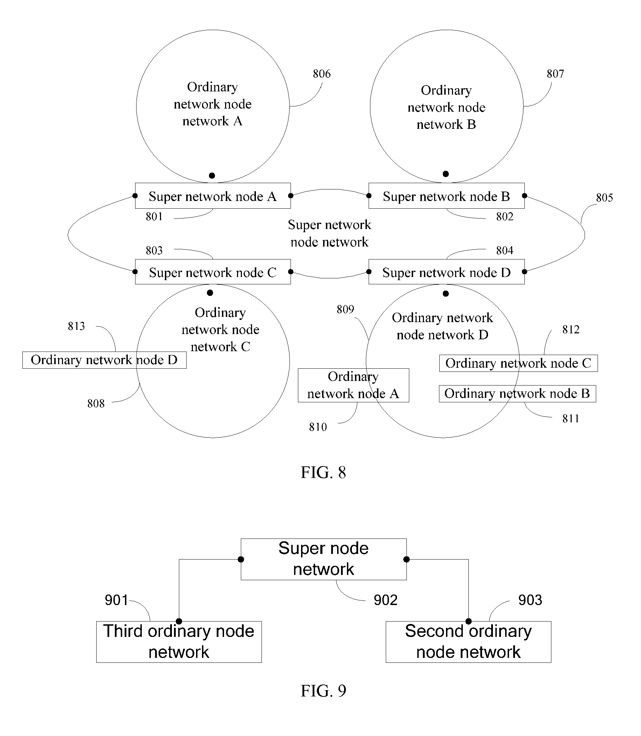

Further, a system for publishing a content is provided in the second embodiment of the present invention. FIG. 8 illustrates the hierarchical P2P network, including a super network node network 805, which includes: super network node A 801, super network node B 802, super network node C 803, and super network node D 804.

The super network node A 801 manages the ordinary network node network A 806.

The super network node B 802 manages the ordinary network node network B 807.

The super network node C 803 manages the ordinary network node network C 808.

The super network node D 804 manages the ordinary network node network D 809.

Each ordinary network node network includes at least one ordinary network node. For ease of description, only part of the ordinary network nodes is described. The ordinary network node A 810, the ordinary network node B 811, and the ordinary network node C 812 are covered by the ordinary network node network D809. The ordinary network node D 813 is covered by the ordinary network node network C 808.

Described below is a scenario where the ordinary network node A releases a content X and the index information is created and updated in the P2P network.

The ordinary network node A generates a key value of X according to the Hash algorithm, and searches the ordinary network node network D for the ordinary network node C that ought to store the key value through the DHT algorithm according to the key value. After the ordinary network node B is found, the ordinary network node B ultimately finds the ordinary network node C through the DHT algorithm according to the key value. The ordinary network node C stores the index information that carries the key value. In this way, the content X is released in the ordinary network node network D.

The ordinary network node A triggers the super network node D to release the content X in the super network node network. After obtaining the key value, the super network node D searches the super network node network for the super network node C that ought to store the key value through the DHT algorithm according to the key value. After the super network node A is found, the super network node A ultimately finds the super network node C through the DHT algorithm according to the key value.

Because the super network node does not store the index information, the super network node C searches the ordinary network node network C for the ordinary network node D that ought to store the key value through the DHT algorithm according to the key value. The ordinary network node D stores the index information that carries the key value. In this way, the content X is released in the super network node network.

Through this embodiment, the index information that ought to be stored in the super network node may be stored on the ordinary network node in the ordinary network node network managed by the super network node. Therefore, the super network node does not need to store the index information, and the index information does not need to occupy the limited storage space of the super node.

As shown in FIG. 9, a system for searching for a content in the first embodiment of the present invention includes:
a third ordinary node network 901, adapted to search for the index information of the content in this ordinary node network, where the third ordinary node network further includes a sixth ordinary node, adapted to: generate the key value of the content in the third ordinary node network (i.e., the fourth key value), and search for the index information of the content responsible for the fourth key value in the third ordinary node network so that the third ordinary node network can find the index information of the content in this ordinary node network;
a super node network 902, adapted to: search for the second super node responsible for the content in this super node network if failing to find the index information of the content in the third ordinary node network, and send trigger information to the second ordinary node network managed by the second super node; and
a second ordinary node network 903 managed by the second super node, adapted to:
   search for the index information of the content in this ordinary node network after receiving the trigger information, and send the index information of the content to the third ordinary node network.

The second ordinary node network covers a third ordinary node, adapted to store the index information of the content so that the second ordinary node network can search out the index information of the content in this ordinary node network. The returning of the index information of the content to the third ordinary node network comes in two scenarios:
if the second ordinary node network is directly connected with the first ordinary node network, the index information may be sent to the third ordinary node network directly;
if the second ordinary node network is not directly connected with the first ordinary node network, the index information needs to be sent through the super node network.

The third ordinary node network receives the index information of the content.

After receiving the index information, the third ordinary node network may search for the corresponding content according to the index information.

In this embodiment, the index information responsible for the content may be searched out of the ordinary node network. Therefore, the index information that ought to be stored in the super node network may be stored in the ordinary node network managed by the super node, the super node does not need to store the index information, and the occupation of the limited space of the super node is reduced.

If the index information of the second ordinary node network carries information about the first super node, the present invention further provides a system for searching for a content in the second embodiment. As against the system for searching for a content in the first embodiment, the system for searching for a content in the second embodiment further includes a first ordinary node network managed by the first super node, adapted to: search for the index information of the content in this ordinary node network, and send the index information of the content to the third ordinary node network. The first ordinary node network covers a second ordinary node, adapted to store the index information of the content so that the first ordinary node network can search out the index information of the content in this ordinary node network.

Through this embodiment, when the index information stored by an ordinary node is not directed to the ordinary node that stores the corresponding content, the index information of the ordinary node that stores the corresponding content can also be obtained ultimately. Therefore, at the time of publishing the content for a second time, it is not necessary to release to content in the super node network, thus reducing the frequency of updating the index information and reducing the processing load of the super node.

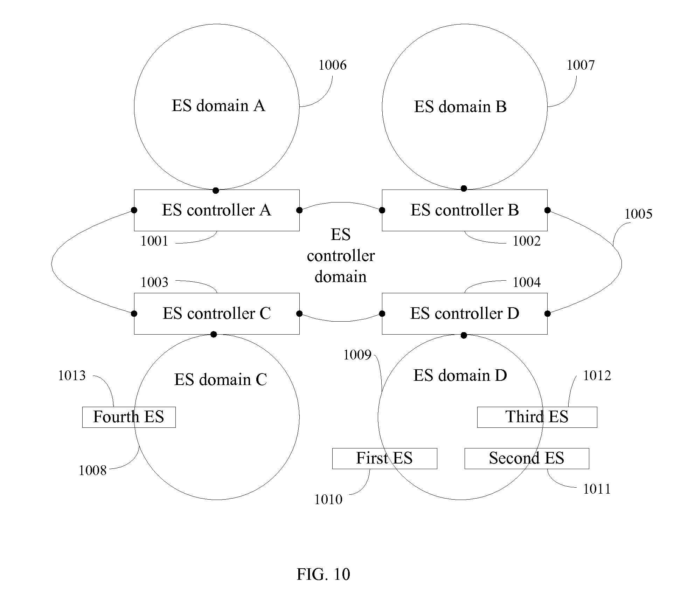

Further, a system for searching for a content is provided in the third embodiment of the present invention. FIG. 10 illustrates the scenario of the IPTV network. The original IPTV system includes: a Central Server (CS), which is a central media server in the IPTV system and is adapted to: store all media contents, and distribute the media contents to the Edge Servers (ESs). The ES is a media server near the customer premises, and provides streaming services for the user. In the IPTV system based on the prior art, multiple ESs combine into an ES domain. The content searching and media scheduling in the ES domain are implemented in a P2P mode. However, the content searching and media scheduling between ES domains need to be implemented by the CS.
Generally, an IPTV system contains only one CS. Therefore, the CS needs to store all media index information, and each attempt of scheduling requires the CS, thus causing a large processing load onto the CS. A new IPTV system is put forward herein. In this system, the CS configured in the IPTV system based on the prior art is removed, and an ES controller is configured for each ES domain. Different ES controllers are organized also in the P2P mode. As shown in FIG. 10, the system includes an ES controller domain 1005, which includes ES controller A 1001, ES controller B 1002, ES controller C 1003, and ES controller D 1004.

The ES controller A manages the ES domain A 1006, the ES controller B manages the ES domain B 1007, the ES controller C manages the ES domain C 1008, and the ES controller D manages the ES domain D 1009. Each ES domain includes at least one ES. For simplicity, this embodiment illustrates only part of the ESs. The first ES 1010, the second ES 1011, and the third ES 1012 are covered by the ES domain D 1009, and the fourth ES 1013 is covered by the ES domain C 1008. In this embodiment, the update of the index information is based on the method for publishing a content in the first embodiment of the present invention. In this embodiment, the process of searching for a content includes the following steps:

The first ES generates a key value through a Hash algorithm according to the name of the desired content, and searches for the third ES that ought to store the key value in the ES domain D through the DHT algorithm according to the key value. First, the second ES is found; and finally, the second ES finds the third ES through the DHT algorithm according to the key value. However, no corresponding index information is found in the third ES. Therefore, the ES controller domain is searched to check whether the corresponding index information is stored in the ES covered by other ES domains.

The first ES triggers the ES controller D to search the ES controller domain for the index information that carries the key value. After obtaining the key value, the ES controller D searches the ES controller domain for the ES controller C that ought to store the key value through the DHT algorithm according to the key value. First, the ES controller A is found; and finally, the ES controller A finds the ES controller C through the DHT algorithm according to the key value.

The ES controller does not store any index information. Therefore, the ES controller C finds the fourth ES that ought to store the key value in the ES domain C through the DHT algorithm according to the key value. The fourth ES finds the stored index information inclusive of the key value according to the key value, and returns the index information to the first ES. Therefore, the first ES can interact with the ES that stores the corresponding content according to the index information, thus finishing media scheduling.

To sum up, through the IPTV system, the method for publishing a content, and the method for searching for a content disclosed herein, only an ES controller needs to be configured for each ES domain without configuring any CS. Moreover, the ES controller does not need to store any index information. Therefore, the ES controller does not need to consume enormous system resources, the processing speed of the ES controller is increased, and the user satisfaction is improved.

In an embodiment of the present invention, the index information that ought to be stored in the super node may be stored on the ordinary node in the ordinary node network managed by the super node. Therefore, the super node does not need to store the index information, and the occupation of the limited space of the super node is reduced. Further, in another embodiment of the present invention, in the case of publishing the same content for a second time, the content needs only to be released in the ordinary node network. The ordinary node that stores the index information inclusive of the content key value updates the stored index information, without the need of publishing the content again in the super node network. Therefore, the frequency of updating the index information is lowered, and the processing load of the super node is reduced.

Detailed above are a method and a system for publishing a content, and a method and a system for searching for a content in an embodiment of the present invention. Although the invention is described through some exemplary embodiments, the invention is not limited to such embodiments. It is apparent that those skilled in the art can make various modifications and variations to the invention without departing from the spirit and scope of the invention.

## Claims

1. A method for publishing a content, comprising:
publishing, by an ordinary node that stores the content, the content in a first ordinary node network that covers the ordinary node;
searching for a super node responsible for the content in a super node network; and
publishing, by the super node, the content in a second ordinary node network managed by the super node.

2. The method for publishing a content according to claim 1, wherein: the publishing, by the ordinary node that stores the content, of the content in the first ordinary node network that covers the ordinary node comprises:
generating, by the ordinary node that stores the content, a key value of the content in the first ordinary node network, namely, a first key value;
searching for the ordinary node responsible for the first key value in the first ordinary node network; and
creating or updating, by the ordinary node responsible for the first key value, index information of the content.

3. The method for publishing a content according to claim 1, wherein: the searching for the super node responsible for the content in the super node network comprises:
generating, by a first super node, a key value of the content in the super node network, namely, a second key value, and managing the first ordinary node network; and
searching for the super node responsible for the second key value in the super node network.

4. The method for publishing a content according to claim 1, wherein: the publishing, by the super node, of the content in the second ordinary node network managed by the super node comprises :
generating, by the super node, a key value of the content in the second ordinary node network, namely, a third key value;
searching for the ordinary node responsible for the third key value in the second ordinary node network; and
creating or updating, by the ordinary node responsible for the third key value, index information of the content;

5. The method for a content according to claim 1, wherein the , by the super node, of the content in the second ordinary node network managed by the super node comprises:
sending, by the super node, a content ID of the content to the ordinary node compliant with preset conditions in the second ordinary node network;
generating, by the ordinary node compliant with the preset conditions, a third key value responsible for the content ID;
searching for the ordinary node responsible for the third key value in the second ordinary node network; and
creating or updating, by the ordinary node responsible for the third key value, index information of the content.

6. The method for publishing a content according to any one of claims 1-5, wherein:
the index information of the content comprises information about the ordinary node that stores the content in the first ordinary node network.

7. The method for a content according to any one of claims 1-5, wherein:
the index information of the content comprises information about the super node responsible for the content in the super node network.

8. A method for searching for a content, comprising:
searching, by an ordinary node that needs to search for the content, for index information of the content in a third ordinary node network that covers the ordinary node;
searching for a super node responsible for the content in a super node network;
searching, by the super node responsible for the content, for the index information responsible for the content in an ordinary node network managed by the super node; and
returning the index information responsible for the content to the ordinary node that needs to search for the content.

9. The method for searching for a content according to claim 8, wherein: after returning the index information of the content to the ordinary node that needs to search for the content, the method further comprises:
determining, by the ordinary node that needs to search for the content, that the index information is directed to the super node; and
searching, by the super node to which the index information is directed, for the index information responsible for the content in the ordinary node network managed by this super node; and
returning the index information of the content to the ordinary node that needs to search for the content.

10. The method for searching for a content according to claim 8, wherein: the searching, by the ordinary node, for the index information of the content in the ordinary node network that covers this ordinary node comprises:
generating, by the ordinary node that needs to search for the content, a key value of the content in the third ordinary node network, namely, a fourth key value;
searching for the ordinary node responsible for the fourth key value in the third ordinary node network according to the fourth key value; and
searching, by the ordinary node responsible for the fourth key value, for the index information of the content, and failing to find the index information of the content.

11. The method for searching for a content according to claim 8, wherein: the searching for the super node responsible for the content in the super node network comprises:
generating, by a third super node, a key value of the content in the super node network, namely, a second key value, and managing the third ordinary node network; and
searching for the super node responsible for the second key value in the super node network.

12. The method for searching for a content according to claim 8, wherein: the searching for the index information corresponding to the content in the ordinary node network comprises:
generating, by the super node responsible for the content, a key value of the content in the second ordinary node network, namely, a third key value, and managing the second ordinary node network;
searching for the ordinary node responsible for the third key value in the second ordinary node network; and
searching, by the ordinary node responsible for the third key value, for the index information of the content in the second ordinary node network.

13. A system for publishing a content, comprising:
a first ordinary node network, adapted to: store index information of the content in a first ordinary node network when publishing the content, and send first trigger information to a super node network;
the super node network, adapted to: receive the first trigger information of the first ordinary node network, search for a second super node responsible for the content in the super node network, and send second trigger information to a second ordinary node network managed by the second super node; and
the second ordinary node network, adapted to store the index information of the content in the second ordinary node network after receiving the second trigger information of the super node network.

14. The system for publishing a content according to claim 13, wherein the first ordinary node network comprises:
a first ordinary node, adapted to: store the content, generate a key value of the content in the first ordinary node network, namely, a first key value, and search the first ordinary node network for a second ordinary node responsible for the first key value; and
the second ordinary node, adapted to store the index information of the content.

15. The system for publishing a content according to claim 13 or 14, wherein the second ordinary node network comprises:
a third ordinary node, adapted to store the index information of the content.

16. A system for searching for a content, comprising:
a third ordinary node network, adapted to: search for index information of the content in the third ordinary node network, and receive the index information of the content;
a super node network, adapted to: search for a second super node responsible for the content in the super node network if failing to find the index information of the content in the third ordinary node network, and send trigger information to a second ordinary node network managed by the second super node; and
the second ordinary node network, adapted to: search for the index information of the content in the second ordinary node network after receiving the trigger information of the super node network, and send the index information of the content to the third ordinary node network.

17. The system for searching for a content according to claim 16, wherein: if the index information of the content received by the third ordinary node network comprises information about a first super node, the system further comprises:
a first ordinary node network managed by the first super node, adapted to: search for the index information of the content in the first ordinary node network, and send the index information of the content to the third ordinary node network.

18. The system for searching for a content according to claim 17, wherein the first ordinary node network comprises:
a second ordinary node, adapted to store the index information of the content.

19. The system for searching for a content according to any one of claims 16-18, wherein the third ordinary node network comprises:
a sixth ordinary node, adapted to: generate a key value of the content in the third ordinary node network, namely, a fourth key value, and search the third ordinary node network for the index information of the content responsible for the fourth key value.

20. The system for searching for a content according to any one of claims 16-18, wherein the second ordinary node network comprises:
a third ordinary node, adapted to store the index information of the content.

21. A network device, comprising:
an information receiving unit, adapted to receive trigger information that carries a content ID of a unique specific content;
a key value generating unit, adapted to generate a key value of the content according to the content ID received by the information receiving unit; and
an ordinary node searching unit, adapted to search for an ordinary node responsible for the key value generated by the key value generating unit.

22. The network device of claim 21, further comprising:
an information sending unit, adapted to send the trigger information to a network node responsible for the key value generated by the key value generating unit.
